# EUROPÄISCHE PATENTSCHRIFT

(11) **EP 2 826 086 B1**
(45) Veröffentlichungstag und Bekanntmachung des Hinweises auf die Patenterteilung: **20.06.2018**
(21) Anmeldenummer: 12799536.3
(22) Anmeldetag: 29.11.2012
(51) Int. Cl.: H01M 8/02, H01M 8/04

(54) **BIPOLARPLATTE SOWIE ELEKTROCHEMISCHE ZELLE MIT EINER SOLCHEN BIPOLARPLATTE**
BIPOLAR PLATE AND ELECTROCHEMICAL CELL WITH SUCH A BIPOLAR PLATE
PLAQUE BIPOLAIRE AINSI QUE CELLULE ÉLECTROCHIMIQUE DOTÉE D'UNE TELLE PLAQUE BIPOLAIRE

(30) Priorität: 13.03.2012 EP 12159142
(43) Veröffentlichungstag der Anmeldung: 21.01.2015
(73) Patentinhaber: Siemens Aktiengesellschaft, 80333 München (DE)
(72) Erfinder: BRANDT, Torsten, 91301 Forchheim (DE)
(86) Internationale Anmeldenummer: PCT/EP2012/073917
(87) Internationale Veröffentlichungsnummer: WO 2013/135322

(56) Entgegenhaltungen:
- EP-A1- 1 689 013
- WO-A1-95/22179
- WO-A2-02/50935
- DE-A1-102005 057 045

## Beschreibung

Die Erfindung betrifft eine Bipolarplatte nach dem Oberbegriff des Anspruchs 1 sowie eine elektrochemische Zelle, insbesondere eine Brennstoffzelle, mit einer solchen Bipolarplatte.

Elektrochemische Zellen sind allgemein bekannt und werden unterteilt in galvanische Zellen und Elektrolysezellen. Eine Elektrolysezelle ist eine Vorrichtung, bei der ein elektrischer Strom eine chemische Reaktion erzwingt, wobei zumindest ein Teil von elektrischer Energie in chemische Energie umgewandelt wird. Eine galvanische Zelle ist eine - zur Elektrolysezelle komplementäre - Vorrichtung zur spontanen Umwandlung von chemischer in elektrische Energie. Eine bekannte Vorrichtung einer solchen galvanischen Zelle ist eine Brennstoffzelle, beispielsweise eine PEM-Brennstoffzelle (Proton Exchange Membrane - Brennstoffzelle oder Polymer Elektrolyt Membrane - Brennstoffzelle).

Brennstoffzellen gewinnen immer mehr an Bedeutung in zukunftsweisenden Konzepten für die Energieerzeugung. Insbesondere Niedertemperatur-Brennstoffzellen auf Basis der Polymer-Elektrolyt-Membran-(PEM)-Technologie werden als umweltfreundliche und effiziente Energiewandler für portable, mobile und stationäre Anwendungen diskutiert und finden bereits erste kommerzielle Verwendungen.

Wesentliches Element einer PEM-Einzelzelle ist eine Membranelektrodeneinheit. Diese besteht aus zwei Elektroden (einer Anode und einer Kathode) und einer sich zwischen den beiden Elektroden befindlichen Elektrolytmembran. Zwischen den Elektroden und der Elektrolytmembran befindet sich eine Katalysatorschicht, in der die wichtigen physikalischen und elektrochemischen Vorgänge, wie Adsorption von Wasserstoff und Sauerstoff am Katalysator, Abgabe und Aufnahme von Elektronen und die Bildung von Wasser kathodenseitig durch Kombination von durch die Membran diffundierten Protonen und (reduziertem) Sauerstoff erfolgen.

In einem Brennstoffzellenstapel befinden sich die Elektroden an der der Elektrolytmembran bzw. Katalysatorschicht abgewandten Seite in Kontakt mit jeweils einer sogenannten Bipolarplatte. Dieses Bauteil hat die Aufgabe, die einzelnen Brennstoffzellen (medienseitig) zu trennen, für Stromfluss im Zellstapel zu sorgen und die Reaktionswärme zu entfernen. Um einen effektiven Stromfluss zu gewährleisten, bestehen die Bipolarplatten aus einem elektrisch-leitendem Material, welches einen niedrigen Übergangswiderstand zu den Elektroden aufweisen muss.

Eine Bipolarplatte der eingangs angegebenen Art ist aus der WO 2004/107486 A1 bekannt. Die Separator- oder Bipolarplatte umfasst zwei profilierte, sich an Kontaktflächen berührende Plattenelemente, zwischen denen ein Fluid- oder Strömungsraum für das Kühlmittel gebildet ist. Die Plattenelemente weisen mehrere symmetrisch auf der Oberfläche der Plattenelemente angeordnete Prägungen nach Art von voneinander abgewandten runden Erhebungen mit einander zugewandten Vertiefungen auf. Die Prägungen beider Plattenelemente sind relativ zueinander versetzt. Ähnliche Anordnungen sind auch aus der WO 95/22179 und WO 02/50935 bekannt. Die in gegenüberliegenden Randbereichen der Platten vorhandenen Erhebungen bzw. Vertiefungen bilden Strömungseinlässe bzw. Strömungsauslässe für das Kühlmittel und sind kleiner als die übrigen Erhebungen. Charakteristisch für solche Bipolarplatten sind zu relativ niedrige Strömungsgeschwindigkeiten sowie eine nicht immer optimale Verteilung des Kühlmittels im Strömungsraum zwischen den Plattenelementen.

Aus der DE 10 2005 057 045 A1 geht ebenfalls eine Bipolarplatte mit zwei Teilplatten hervor, wobei wenigstens eine der Teilplatten eine gleichmäßige Anordnung von noppenartigen, erhabenen Stützstellen aufweist, wobei neben jeder erhabenen Stützstelle eine gleichartige negative Stützstelle ausgebildet ist. Die Stützstellen beider Teilplatten sind jedoch nicht so angeordnet, dass über die Stützstellen Strömungskanäle definiert sind, im Gegenteil, der Kontakt beider Teilplatten zueinander erfolgt im Bereich der Stützstellen, wie dies aus Fig. 4 der DE 10 2005 057 045 A1 ersichtlich ist.

Weitere Bipolarplatten mit regelmäßigen Strukturen an der Oberfläche sind aus der US 2010/0316924 A1, der US 2003/0162078 A1 und der WO 2006/067617 A1 bekannt.

Der Erfindung liegt die Aufgabe zugrunde, eine besonders gleichmäßige Durchströmung einer Bipolarplatte für eine elektrochemische Zelle zu ermöglichen.

Die Aufgabe wird erfindungsgemäß gelöst durch die in Anspruch 1 definierte Bipolarplatte für eine elektrochemische Zelle.

Die Aufgabe wird weiterhin erfindungsgemäß gelöst durch eine elektrochemische Zelle, insbesondere eine Brennstoffzelle, mit mindestens einer derartigen Bipolarplatte. Die in Bezug auf die Bipolarplatte nachstehend aufgeführten Vorteile und bevorzugten Ausgestaltungen lassen sich sinngemäß auf die elektrochemische Zelle übertragen.

Die Erfindung basiert auf der Überlegung, die Strömungsrichtung des Kühlmittels gezielt zu führen, indem durch die Geometrie und Anordnung der Erhebungen der Verlauf der Strömungskanäle zwischen den zwei Plattenelementen modifiziert wird. Insbesondere werden die Strömungskanäle zwischen beiden Plattenelementen an gewählten Stellen verengt bzw. blockiert, so dass das Kühlmittel zwangsweise um diese Stellen herumströmt und dadurch eine bessere Verteilung des Kühlmittels im gesamten Netz von Strömungskanälen erreicht ist. Unter "Geometrie der Erhebungen" wird hierbei die Größe und/oder die Form der Erhebungen verstanden. Insbesondere stellen die Mehrheit der Erhebungen auf den Plattenelementen erste Erhebungen dar, wie sie standardmäßig bei solchen Plattenelementen im Rahmen von Bipolarplatten für elektrochemische Zellen ausgebildet sind. Erhebungen, die kleiner als die ersten Erhebungen ausgebildet sind, werden hierbei als zweite Erhebungen bezeichnet. Unter "Anordnung der Erhebungen" wird die Positionierung bzw. Verteilung der ersten und zweiten Erhebungen gegenüber einander verstanden. Insbesondere sind deutlich mehr erste als zweite Erhebungen vorgesehen und die zweiten Erhebungen sind zwischen den ersten Erhebungen angeordnet. Die zweiten Erhebungen sind insbesondere derart auf dem Plattenelement verteilt, dass eine zweite Erhebung oder eine Gruppe von zweiten Erhebungen von mindestens drei Seiten, insbesondere von allen Seiten von ersten Erhebungen umgeben ist.

Die Erhebungen beider Plattenelemente sind dabei derart zueinander versetzt, dass jede Erhebung eines der Plattenelemente mindestens eine erste oder zweite Erhebung des anderen Plattenelements nur teilweise überlappt. Durch die Öffnungen der Erhebungen verlaufen somit Strömungskanäle, die Teil des Strömungsraums sind. Die Vielzahl der Strömungskanäle zwischen dem Strömungseinlass und dem Strömungsauslass bildet dabei ein Netzwerk von Strömungskanälen.

Konstruktiv wird eine Verengung bzw. Unterbrechung der Strömungskanäle erreicht, indem die Öffnungen der zweiten Erhebungen, die kleiner sind als die Öffnungen der ersten Erhebungen, mindestens eine gegenüberliegende, versetzte Erhebung des anderen Plattenelements nur geringfügig oder gar nicht überlappen. Durch die Verengungen und Unterbrechungen einiger der Strömungskanäle wird eine erhöhte Strömungsgeschwindigkeit in den durchströmbaren Strömungskanälen erreicht. Hierdurch wird erreicht, dass das Strömungsmedium mit einer erhöhten Geschwindigkeit durch die sonst schwer erreichbaren Bereiche fließt.

Durch ein gezieltes Umlenken des Kühlmittels werden insbesondere Bypass-Strömungen erzeugt, so dass Bereiche, die in der Regel nicht so gut erreichbar für das Strömungsmedium sind, ebenfalls ausreichend vom Kühlmittel durchflutet werden. Insbesondere wird dabei die Strömungsgeschwindigkeit des Kühlmittels erhöht. Eine derartige Bipolarplatte zeichnet sich durch einen besseren Gasaustrag bzw. eine homogene Kühlcharakteristik über der gesamten Fläche aus.
Üblicherweise fließt das Kühlmittel auf dem direkten Weg bzw. entlang einer gedachten Verbindungslinie zwischen dem Strömungseinlass und dem Strömungsauslass und Bereiche, die weiter weg von der Verbindungslinie sind, sind schlechter durchflutet. Die Verbindungslinie ist hierbei als die kürzeste Strecke zwischen dem Strömungseinlass und dem Strömungsauslass der elektrochemischen Zelle definiert und fällt im Wesentlichen mit einer Hauptströmungsrichtung des Kühlmittels zusammen. Vorteilhafterweise sind daher die zweiten Erhebungen im Bereich der Verbindungslinie zwischen dem Strömungseinlass und dem Strömungsauslass vorgesehen, um das Kühlmittel zu den Bereichen abseits der Hauptströmungsrichtung umzuleiten. Zweckdienlicherweise sind zudem abseits der Verbindungslinie zwischen dem Strömungseinlass und dem Strömungsauslass nur erste Erhebungen vorgesehen, durch welche ein Bypass-Strom erzeugt wird, um Bereiche niedriger Strömungsgeschwindigkeit in den Umlenkbereichen zu vermeiden.
Im Hinblick auf eine effiziente Umverteilung des Strömungsmediums ist mindestens eine Gruppe von zwei oder mehreren räumlich nahen zweiten Erhebungen ausgebildet. Je mehr Erhebungen eine solche Gruppe umfasst, desto größer ist die Wirkung auf die Ausbreitung des Strömungsmediums bzw. Kühlmittels. Die mindestens eine Gruppe umfasst zwei oder mehrere unmittelbar nebeneinander angeordnete zweite Erhebungen. Es sind in Bezug auf die Anzahl und die Anordnung der ersten und der zweiten Erhebungen auch weitere Varianten denkbar, die hier jedoch nicht ausführlich diskutiert werden.
Eine besonders gute Kühlcharakteristik wird erreicht, indem das Kühlmittel serpentinenförmig im Strömungsraum zwischen dem Strömungseinlass und dem Strömungsauslass geführt wird. Eine einfachste Form der serpentinenförmigen Führung wird erreicht, indem vorzugsweise mindestens zwei Gruppen von zweiten Erhebungen vorgesehen sind, von denen eine näher an den Strömungseinlass und eine näher an den Strömungsauslass ist. Näher an den Strömungseinlass bedeutet hierbei, dass wenn die Fläche der Plattenelemente durch eine Mittellinie zwischen dem Strömungseinlass und dem Strömungsauslass in zwei gleiche Hälften geteilt wird, diese Gruppe sich vollständig oder wenigstens größtenteils in der dem Strömungseinlass zugeordnete Hälfte befindet. Das gleiche gilt für die andere Gruppe, allerdings bezogen auf den Strömungsauslass.
Im Hinblick auf eine gleichmäßige Strömungsverteilung sind die zweiten Erhebungen vorzugsweise symmetrisch verteilt.
Bevorzugt weist lediglich eines der beiden Plattenelemente der Bipolarplatte zweite Erhebungen auf. Der wesentliche Vorteil hierbei ist, dass das Plattenelement, welches nur die ersten Erhebungen aufweist, ein Standard-Plattenelement sein kann, wie es heutzutage in Brennstoffzellen eingesetzt wird. Da dabei nur eines von zwei Plattenelementen modifiziert ist, sind die Herstellungskosten für eine oben beschriebene Bipolarplatte möglichst niedrig gehalten.
Im Hinblick auf eine technologisch einfache und kostengünstige Herstellung der Erhebungen, die die Möglichkeit zum Modifizieren der Geometrie der Erhebungen bietet, werden die Erhebungen im jeweiligen Plattenelement eingeprägt, so dass sowohl die ersten als auch die zweiten Erhebungen durch Einprägen im Material des Plattenelements gebildet sind.

Zweckdienlicherweise sind die ersten Erhebungen als Noppen mit einem kreisförmigen Querschnitt ausgebildet. Insbesondere weisen dabei je zwei benachbarte Noppen den gleichen Abstand zueinander auf. Nach einer bevorzugten Ausgestaltung sind die zweiten Erhebungen als Noppen mit einem halbkreisförmigen Querschnitt ausgebildet. Die zweiten Erhebungen weisen dabei insbesondere den gleichen Radius wie die ersten Erhebungen auf, aufgrund ihres halbkreisförmigen Querschnitts sind sie jedoch nur halb so groß wie die ersten Erhebungen.

Ein Ausführungsbeispiel wird anhand einer Zeichnung näher erläutert. Hierin zeigen:
- FIG 1: schematisch und stark vereinfacht eine Draufsicht auf eine Bipolarplatte,
- FIG 2: eine Draufsicht auf zwei übereinander positionierte Plattenelemente einer Bipolarplatte gemäß dem Stand der Technik, bei der keine gezielte Strömungsführung erfolgt,
- FIG 3: in einer Seitenansicht einen Schnitt durch die Bipolarplatte gemäß FIG 2, und
- FIG 4: eine Draufsicht auf zwei übereinander positionierte Plattenelemente einer Bipolarplatte mit einer serpentinenförmigen Strömungsführung, und
- FIG 5: in einer Seitenansicht einen Schnitt durch die Bipolarplatte gemäß FIG 4.

Gleiche Bezugszeichen haben in den verschiedenen Figuren die gleiche Bedeutung.

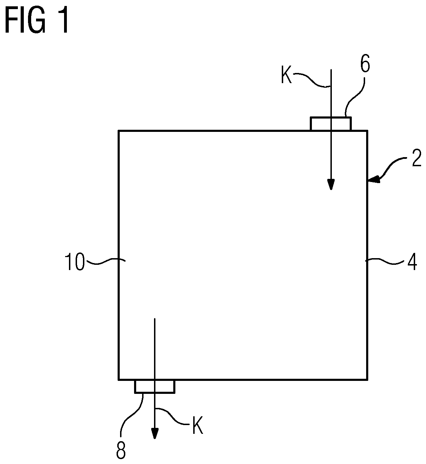

In FIG 1 ist eine Bipolarplatte 2 für eine nicht näher gezeigte Brennstoffzelle in einer schematischen Draufsicht dargestellt. Innerhalb der Bipolarplatte 2 ist ein Strömungsraum 4 für Kühlmittel K, in diesem Fall Kühlwasser, ausgebildet. Durch einen Strömungseinlass 6 wird von Kühlwasser K in den Strömungsraum 4 eingeleitet und durch einen an einer gegenüberliegenden Seite angeordneten Strömungsauslass 8 hinausgeleitet. Der Strömungseinlass 6 und der Strömungsauslass 8 liegen dabei an einer hier nicht näher gezeigten Diagonallinie.

Der Strömungsraum 4 ist auf seinen beiden Flachseiten begrenzt durch zwei Plattenelemente, von denen in FIG 1 lediglich ein oberes Plattenelement 10 sichtbar ist. Das Plattenelement 10 ist metallisch. Die Oberfläche des Plattenelements 10 weist zudem eine Profilierung aus, die in FIG 1 nicht näher gezeigt ist.

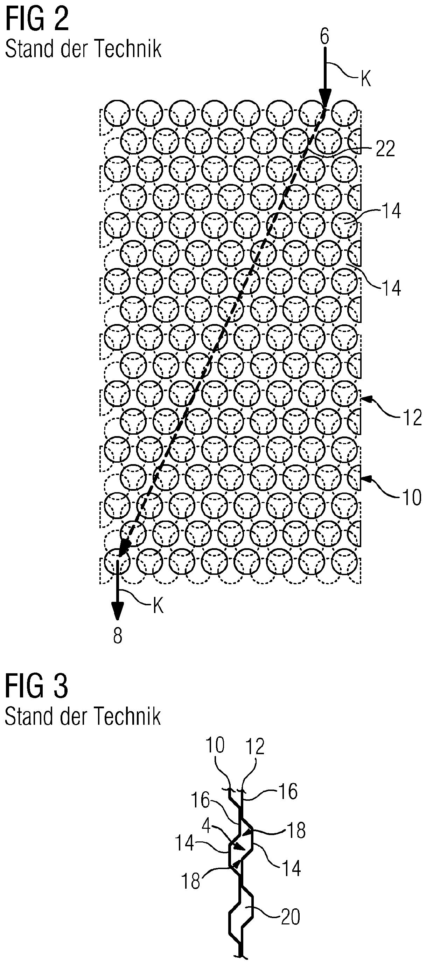

Der Aufbau und die Anordnung der Plattenelemente 10, 12 gemäß dem Stand der Technik ist in FIG 2 und FIG 3 gezeigt. In den Plattenelementen 10, 12 ist eine Vielzahl von noppenförmigen Erhebungen, weiterhin auch als erste Erhebungen 14 bezeichnet, eingeprägt. In FIG 2 sind die Erhebungen 14 des oberen Plattenelements 10 mit durchgehender Linie gezeigt, während die Erhebungen 14 des unteren Plattenelements 12 mit gestrichelter Linie gekennzeichnet sind.

Wie aus FIG 3 ersichtlich, sind die Erhebungen 14 eines der Plattenelemente 10, 12 dem jeweils anderen Plattenelement 10, 12 abgewandt. Die Erhebungen gemäß FIG 2 und FIG 3 weisen alle einen kreisförmigen Querschnitt auf und sind gleich groß und symmetrisch angeordnet. Dabei weist jedes der Plattenelemente 10, 12 eine Kontaktebene 16 auf, mit der es auf dem anderen Plattenelement 10, 12 aufliegt und aus der die Erhebungen 14 nach außen herausragen. Der Kontakt zwischen den beiden Plattenelementen 10, 12 erfolgt in der Kontaktebene 16.

Die im Material der Plattenelemente 10, 12 eingeprägten Erhebungen oder Noppen 14 sind von drei Seiten umschlossen jedoch zur Kontaktebene 16 hin weisen sie eine Öffnung 18 auf. Im zusammengebauten Zustand der Bipolarplatte 2 sind die Noppen 14 zueinander versetzt. Die Öffnungen 18 überlappen sich nur teilweise, so dass durch die Erhebungen 14 im Strömungsraum 4 eine Vielzahl von diskreten Strömungskanälen 20 für das Kühlwasser K verlaufen.

In FIG 2 ist weiterhin eine Hauptströmungsrichtung 22 gezeigt, welche im Wesentlichen durch die Verbindungslinie zwischen dem Strömungseinlass 6 und dem Strömungsauslass 8, dargestellt ist.

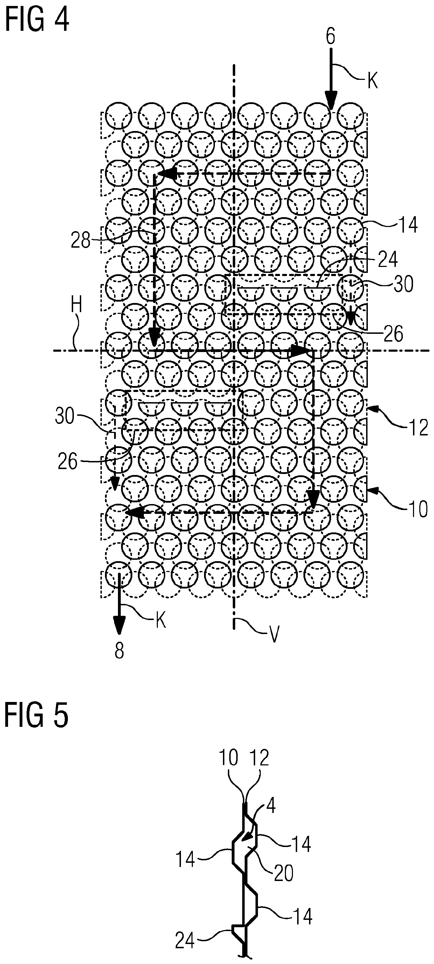

Um eine bessere Verteilung des Kühlwassers K im Strömungsraum 4 zu erreichen, sind einige Erhebungen modifiziert, so dass der Verlauf der Strömungskanäle 20 zwischen den Plattenelementen 10, 12 verändert wird. Dies ist aus FIG 4 ersichtlich. Die hier als zweite Erhebungen 24 bezeichneten modifizierten Erhebungen weisen im gezeigten Ausführungsbeispiel einen halbkreisförmigen Querschnitt auf.

Gemäß dem in den FIG 4 und FIG 5 gezeigten Ausführungsbeispiel weist lediglich das obere Plattenelement 10 die zweiten, halbkreisförmigen Noppen 24 auf, während im unteren Plattenelement 12 lediglich die aus dem Stand der Technik bereits bekannten, kreisförmigen Noppen eingeprägt sind. Aufgrund der veränderten Geometrie der zweiten Noppen 24 überlappen diese nicht mehr die Öffnungen 18 der ersten Noppen 14 der unteren Platte 12 (siehe FIG 5). Dies hat zur Folge, dass an der Stelle der zweiten Noppen 24 das Netz von Strömungskanälen 20 im Strömungsraum 4 unterbrochen ist. Durch die gezielte Anordnung der zweiten Erhebungen 24 kann somit die Kühlwasserströmung zwischen den Plattenelementen 10, 12 umgeleitet werden, um eine homogenere Kühlcharakteristik über der gesamten Fläche der Plattenelemente 10, 12 zu erreichen.

Im Ausführungsbeispiel gemäß FIG 4 sind zwei Gruppen 26 von jeweils drei, unmittelbar nebeneinander angeordneten zweiten Erhebungen 24 vorgesehen. Die zwei Gruppen 26 liegen dabei im Bereich der Hauptströmungsrichtung 22, d.h. sie liegen im Bereich der Verbindungslinie zwischen dem Strömungseinlass 6 und dem Strömungsauslass 8. Die Gruppen 26 sind dabei insbesondere etwa quer zur Hauptströmungsrichtung 22 ausgerichtet, i. d. R. schließt jeder mit dem Bezugszeichen 26 versehene Block einen Winkel zwischen 0° und 90° mit der Hauptströmungsrichtung 22 ein. Eine der Gruppen 26 ist näher an den Strömungseinlass 6, und die andere Gruppe 26 näher an den Strömungsauslass 8 positioniert, wobei beide Gruppen 26 von allen Seiten von ersten Erhebungen 14 umgeben sind. Dadurch ergibt sich ein Versatz der beiden Gruppen 26 in Bezug auf eine vertikale Mittellinie V, insbesondere liegen beide Gruppen 26 an der Diagonallinie zwischen dem Strömungseinlass 6 und dem Strömungsauslass 8. Außerdem befinden sich die beiden Gruppen 26 auf unterschiedlichen Seiten einer horizontalen Mittellinie H zwischen dem Strömungseinlass 6 und dem Strömungsauslass 8. Die Gruppen 26 sind dabei insbesondere rotationssymmetrisch in Bezug auf einen Schnittpunkt der Mittellinien H und V angeordnet.

Dank der oben beschriebenen und aus FIG 4 ersichtlichen Anordnung der zweiten Noppen 24 ergibt sich eine serpentinenförmige Führung des Kühlwassers zwischen den Plattenelementen 10, 12, die in FIG 4 durch eine gestrichelte Linie 28 angedeutet ist. Es werden somit auch Bereiche des Strömungsraums 4 vom Kühlwasser K intensiv durchflutet, die abseits der Hauptströmungsrichtung 22 liegen, insbesondere die Eckbereiche. Zwischen dem Strömungseinlass 6 und dem Strömungsauslass 8 wird dabei ein größerer Druckabfall erzeugt und der Strömungsraum wird verengt, wodurch die Strömungsgeschwindigkeit des Kühlwassers K erhöht wird. Um Strömungstotzonen zu vermeiden, sind zudem seitlich der Gruppen 26 Bypasskanäle vorgesehen, die in FIG 4 durch die Pfeile 30 gekennzeichnet sind.

Durch die zweiten, modifizierten Noppen 24 wird insbesondere eine optimale Verteilung des Kühlwassers K im Strömungsraum 4 zwischen der Plattenelemente 10, 12 einer Bipolarplatte 2 erreicht. Dies lässt sich auch herstellungstechnisch einfach realisieren, da lediglich eines der beiden Plattenelemente 10, 12 modifiziert wird und zudem Noppen 24 mit verändertem Querschnitt leicht herzustellen sind.

## Patentansprüche

1. Bipolarplatte (2) für eine elektrochemische Zelle (4), umfassend einen zwischen zwei Plattenelementen (10, 12) angeordneten Strömungsraum (4) mit einem Strömungseinlass (6) sowie einem Strömungsauslass (8) für ein den Strömungsraum (4) durchströmendes Kühlmittel (K),
wobei jedes Plattenelement (10, 12) eine Kontaktebene (16) zum Kontaktieren des jeweils anderen Plattenelements (10, 12) sowie zwischen dem Strömungseinlass (6) und dem Strömungsauslass (8) eine Vielzahl von aus der Kontaktebene (16) herausragenden und dem jeweils anderen Plattenelement (10, 12) abgewandten Erhebungen (14, 24) aufweist, die zur Kontaktebene (16) hin Öffnungen (18) aufweisen, und wobei Strömungskanäle (20) durch die Öffnungen (18) der Erhebungen (14, 24) gebildet sind, indem die Erhebungen (14, 24) beider Plattenelemente (10, 12) derart zueinander versetzt sind, dass jede Erhebung (14, 24) mindestens eine Erhebung (14, 24) des jeweils anderen Plattenelements (10, 12) nur teilweise überlappt, **dadurch gekennzeichnet,**
**dass** im Bereich einer der kürzesten Strecke zwischen dem Strömungseinlass (6) und dem Strömungsauslass (8) entsprechenden Verbindungsline einzelne Erhebungen (24) oder mindestens eine Gruppe umfassend zwei oder mehrere unmittelbar nebeneinander angeordnete kleiner ausgestaltete Erhebungen (24) welche einzelnen Erhebungen (24) oder Gruppe jeweils auf mindestens drei Seiten von den übrigen Erhebungen (14) umgeben sind, kleiner als diese übrigen Erhebungen (14) ausgestaltet sind, so dass die Strömungskanäle (20) im Bereich der kleiner ausgestalteten Erhebungen (24) verengt oder unterbrochen sind und eine von der kürzesten Strecke zwischen dem Strömungseinlass (6) und dem Strömungsauslass (8) abweichende Umleitung des Kühlmittels (K) bewirken.

2. Bipolarplatte (2) nach Anspruch 1,
wobei die kleiner ausgestalteten einzelnen Erhebungen (24) oder die mindestens eine Gruppe von kleiner ausgestalteten Erhebungen (24) auf allen Seiten von den übrigen Erhebungen (14) umgeben sind.

3. Bipolarplatte (2) nach einem der vorhergehenden Ansprüche wobei mindestens zwei Gruppen (26) von kleiner ausgestalteten Erhebungen (24) vorgesehen sind, eine näher zu dem Strömungseinlass (6) und eine näher zu dem Strömungsauslass (8).

4. Bipolarplatte (2) nach einem der vorhergehenden Ansprüche, wobei die kleiner ausgestalteten Erhebungen (24) symmetrisch verteilt sind.

5. Bipolarplatte (2) nach einem der vorhergehenden Ansprüche, wobei lediglich eines der Plattenelemente (10) die kleiner ausgestalteten Erhebungen (24) aufweist.

6. Bipolarplatte (2) nach einem der vorhergehenden Ansprüche, wobei die Erhebungen (14, 24) Einprägungen im Material des jeweiligen Plattenelements (10, 12) sind.

7. Bipolarplatte (2) nach einem der vorhergehenden Ansprüche, wobei die kleiner ausgestalteten Erhebungen (24) als Noppen mit einem halbkreisförmigen Querschnitt und die übrigen Erhebungen (14) als Noppen mit einem kreisförmigen Querschnitt ausgebildet sind.

8. Elektrochemische Zelle, insbesondere eine Brennstoffzelle (4), umfassend mindestens eine Bipolarplatte (2) nach einem der Ansprüche 1 bis 7.

## Claims

1. Bipolar plate (2) for an electrochemical cell (4), comprising a flow field (4) arranged between two plate elements (10, 12) with a flow inlet (6) and a flow outlet (8) for a coolant (K) flowing through the flow field (4), wherein each plate element (10, 12) has a contact plane (16) for contacting the respective other plate element (10, 12) and a plurality of protrusions (14, 24) projecting from the contact plane (16) and facing away from the respective other plate element (10, 12) between the flow inlet (6) and the flow outlet (8), which protrusions have apertures (18) towards the contact plane (16), and wherein flow channels (20) are formed by means of the apertures (18) of the protrusions (14, 24) in that the protrusions (14, 24) of the two plate elements (10, 12) are offset relative to one another such that each protrusion (14, 24) only partially overlaps at least one protrusion (14, 24) of the respective other plate element (10, 12),
**characterised in that**
in the region of a connecting line corresponding to the shortest route between the flow inlet (6) and the flow outlet (8), individual protrusions (24) or at least one group comprising two or more smaller protrusions (24) arranged immediately adjacent to one another, which individual protrusions (24) or group are in each case surrounded on at least three sides by the remaining protrusions (14), are smaller than said remaining protrusions (14), so that the flow channels (20) are constricted or interrupted in the region of the smaller protrusions (24), and bring about a diversion of the coolant (K) deviating from the shortest route between the flow inlet (6) and the flow outlet (8).

2. Bipolar plate (2) according to claim 1,
wherein the smaller protrusions (24) or the at least one group of smaller protrusions (24) are surrounded on all sides by the remaining protrusions (14).

3. Bipolar plate (2) according to one of the preceding claims,
wherein at least two groups (26) of smaller protrusions (24) are provided, one of which is closer to the flow inlet (6) and one is closer to the flow outlet (8).

4. Bipolar plate (2) according to one of the preceding claims,
wherein the smaller protrusions (24) are symmetrically distributed.

5. Bipolar plate (2) according to one of the preceding claims,
wherein only one of the plate elements (10) has the smaller protrusions (24).

6. Bipolar plate (2) according to one of the preceding claims,
wherein the protrusions (14, 24) are stamped impressions in the material of the respective plate element (10, 12).

7. Bipolar plate (2) according to one of the preceding claims,
wherein the smaller protrusions (24) are configured as knobs with a semicircular cross-section and the remaining protrusions (14) are configured as knobs with a circular cross-section.

8. Electrochemical cell, in particular a fuel cell (4) comprising at least one bipolar plate (2) according to one of the claims 1 to 7.

## Revendications

1. Plaque (2) bipolaire pour une cellule (4) électrochimique, comprenant un espace (4) d'écoulement, qui est disposé entre deux éléments (10, 12) de plaque et qui a une entrée (6) ainsi qu'une sortie (8) pour l'écoulement d'un fluide (K) de refroidissement passant dans l'espace (4) d'écoulement,
dans laquelle chaque élément (10, 12) de plaque a un plan (16) de contact pour la mise en contact avec respectivement l'autre élément (10, 12) de plaque, ainsi qu'entre l'entrée (6) pour l'écoulement et la sortie (8) pour l'écoulement, une pluralité de bossages (14, 24), qui sortent du plan (16) de contact et s'éloignent de l'autre élément (10, 12) de plaque et qui ont des ouvertures (18) vers le plan (16) de contact et dans laquelle des canaux (20) d'écoulement sont formés par les ouvertures (18) des bossages (14, 24), par le fait que les bossages (14, 24) des deux éléments (10, 12) de plaque sont décalés les uns par rapport aux autres, de manière à ce que chaque bossage (14, 24) chevauche seulement partiellement au moins un bossage (14, 24) de l'autre élément (10, 12) de plaque,
**caractérisée**
**en ce que**, dans la région d'une ligne de liaison correspondant à la distance la plus courte entre l'entrée (6) pour l'écoulement et la sortie (8) pour l'écoulement, sont constitués des bossages (24) individuels ou au moins un groupe comprenant deux ou plusieurs bossages (24) de conformation petite et disposés directement les uns à côté des autres, lesquels bossages (24) individuels ou groupe sont entourés sur au moins trois côtés par les autres bossages (14), en étant plus petits que ces autres bossages (14), de manière à rétrécir ou à interrompre les canaux (20) d'écoulement dans la région des bossages (24) de conformation petite et à provoquer une déviation du fluide (K) de refroidissement s'écartant de la distance la plus courte entre l'entrée (6) pour l'écoulement et la sortie (8) pour l' écoulement.

2. Plaque (2) bipolaire suivant la revendication 1,
dans laquelle les bossages (24) individuels de conformation petite ou le au moins un groupe de bossages (24) de conformation petite sont entourés des autres bossages (14) de tous les côtés.

3. Plaque (2) bipolaire suivant l'une des revendications précédentes,
dans laquelle il est prévu au moins deux groupes (26) de bossages (24) de conformation petite, un près de l'entrée (6) pour l'écoulement et un proche de la sortie (8) pour l'écoulement.

4. Plaque (2) bipolaire suivant l'une des revendications précédentes,
dans laquelle les bossages (24) de conformation petite sont répartis symétriquement.

5. Plaque (2) bipolaire suivant l'une des revendications précédentes,
dans laquelle seulement l'un des éléments (10) de plaque a les bossages (24) de conformation petite.

6. Plaque (2) bipolaire suivant l'une des revendications précédentes,
dans laquelle les bossages (14, 24) sont des empreintes dans le matériau de l'élément (10, 12) de plaque.

7. Plaque (2) bipolaire suivant l'une des revendications précédentes,
dans laquelle les bossages (24) de conformation petite sont conformés sous la forme de boutons de section transversale hémicirculaire et les autres bossages (14) sous la forme de boutons de section transversale circulaire.

8. Elément électrochimique, notamment pile à combustible (4), comprenant au moins une plaque (2) bipolaire suivant l'une des revendications 1 à 7.
